# EUROPEAN PATENT APPLICATION

(11) **EP 2 480 010 A1**
(43) Date of publication of application: **25.07.2012**
(21) Application number: 10841918.5
(22) Date of filing: 30.06.2010
(51) Int. Cl.: H04W 4/00

(54) **METHOD AND SYSTEM FOR SHARING LOAD DYNAMICALLY IN SHORT MESSAGE SYSTEM**

(30) Priority: 08.01.2010 CN 201010034016
(71) Applicant: ZTE Corporation, Shenzhen, Guangdong 518057 (CN)
(72) Inventor: HE, Weihua, Guangdong 518057 (CN)
(74) Representative: Inspicos A/S
(86) International application number: PCT/CN2010/074797
(87) International publication number: WO 2011/082575

(57) **Abstract**

The present invention discloses a method for dynamically sharing load in a short message system, and the method includes: classifying real network elements of same type into a virtual network element, wherein the adjacent network element of short message gateway acts as a real network element; according to a load sharing policy, the short message gateway forwarding short messages to a real network element belonging to virtual network element via the virtual network element to dynamically share the load. The present invention discloses a system for sharing load dynamically in a short message system, and in the system, a classifying unit is used to classify real network elements of same type into a virtual network element; a load sharing unit is used by a short message gateway to forward short messages to a real network element belonging to virtual network element via the virtual network element according to load sharing policy to share the load dynamically. With the method and the system of the present invention, the waste of hardware investment due to the hardware upgrade can be avoided.

## Description

### Technical Field

The present invention relates to the telecommunication field of short messaging technology, and more especially, to a method and system for dynamically sharing the load of the adjacent network element with the use of the virtual network element account in a short message gateway system.

### Background of the Related Art

With the rapid promotion of mobile phone popularity, thumb economy that takes the mobile phone SMS "Happy New Year" as the representative shows its vitality in 2009 Chinese New Year holidays once again. According to latest statistics of China Mobile, China Mobile has 4.6 billion short messages on January 25, 2009, New Year's Eve, which has an increase of 14% over the last year. The fashionable MMS "Happy New Year" has also become the choice of many users. According to the latest statistics of China Unicom, China Unicom has 497 million short messages sent on January 25, 2009, New Year's Eve. Due to the estimations by three telecom operators: China Mobile, China Telecom and China Unicom, on holidays from the New Year's Eve to the sixth day of Chinese New Year, the number of mobile phone short messages sent in nation is expected to more than 18 billion. With the growing number of short message services, devices such as the short message center, the SMS gateway and so on constructed by three operators in several years ago have been overwhelmed, therefore they are upgraded. Although some old models of the servers and the switches during the upgrade process might continue to bear services, due to technical restrictions, they have to be off the assembly line. If the manufacturer is replaced in the capacity upgrade process, the original devices cannot be utilized at a maximum, resulting in a waste of hardware investment.

In summary, the scheme for sharing the short message load in the existing short message gateway system uses the method of hardware upgrade, that is, it needs to change the same type of the network element devices connected with the short message gateway in the short message gateway system in order to share the load. Moreover, the change only refers to temporary processing in a stage and it is not once and for all, and when the load is further deteriorated, it continues to change the same type of the network element devices that are connected with the short message gateway, and changing the same type of network element devices again and again with the change of load sharing might result in a significant waste of hardware investment.

### Summary of the Invention

In view of this, the main purpose of the present invention is to provide a method and system for sharing load dynamically in a short messaging system so as to avoid the waste of hardware investment due to the hardware upgrade.

To achieve the aforementioned purpose, the technical solution of the present invention is accomplished as follows.

A method for dynamically sharing load in a short message system comprises:
classifying real network elements of same type into a virtual network element; wherein, an adjacent network element of a short message gateway acts as the real network element;
the short message gateway forwarding short messages via the virtual network element to the real network elements belonging to the virtual network element according to a load sharing policy so as to achieve dynamic load sharing.

Before forwarding the short messages, the method further comprises a configuration process, and the configuration process comprises:
configuring real network element accounts;
configuring a virtual network element account corresponding to the real network element accounts, and configuring a load ratio value of each real network element account in the virtual network element account;
configuring routing data corresponding to the virtual network element account.

Forwarding the short messages to the real network elements according to the load sharing policy comprises:
the short message gateway forwarding the short messages to the virtual network element in which the virtual network element account is located according to the virtual network element account corresponding to the routing data;
the short message gateway forwarding the short messages to the real network elements in which the real network element accounts that do not reach the load ratio value are located in the virtual network element account according to the real network element accounts corresponding to the virtual network element account as well as the load ratio value of each real network element account in the virtual network element account.

The load sharing policy comprises: the load radio value of each real network element account in the virtual network element account, and/or the number of short messages which have been sent to each real network element account in the virtual network element account in a historical record.

There are at least two real network element accounts in the virtual network element account.

A system for dynamically sharing load in a short message system comprises: a classifying unit and a load sharing unit; wherein,
the classifying unit is configured to classify real network elements of same type into a virtual network element; wherein, an adjacent network element of short message gateway acts as the real network element;
the load sharing unit is used by the short message gateway to forward short messages via the virtual network element to the real network elements belonging to the virtual network element according to a load sharing policy, so as to achieve dynamic load sharing.

The system further comprises: a configuration unit, which is configured to configure real network element accounts; configure the virtual network element account corresponding to the real network element accounts, and a load ratio value of each real network element account in the virtual network element account; configure routing data corresponding to the virtual network element account.

The load sharing unit is further used by the short message gateway to send the short messages to the virtual network element in which the virtual network element account is located according to the virtual network element account corresponding to said routing data; the short message gateway forwards the short messages to the real network elements in which the real network element accounts that do not reach the load ratio value are located in the virtual network element account according to the real network element accounts corresponding to the virtual network element account as well as the load ratio value of each real network element account in the virtual network element account.

The classifying unit is further configured to classify at least two real network elements of same type into one virtual network element.

In the present invention, real network elements of same type are classified into the virtual network element; wherein, the adjacent network elements of the short message gateway act as real network elements; the short message gateway forwards the short messages via the virtual network element to the real network elements belonging to the virtual network element according to the load sharing policy so as to achieve dynamic load sharing.

With the present invention, according to the load sharing policy and the forwarding of virtual network element, it can achieve dynamic load sharing with no need to change the same type of the network element devices that are connected with the short message gateway, thus avoiding the waste of hardware investment brought by the hardware upgrade.

### Brief Description of Drawings

FIG. 1 is a schematic diagram of networking in accordance with a first embodiment of the present invention;
FIG. 2 is a schematic diagram of the configuration process in accordance with a second embodiment of the present invention;
FIG. 3 is a flow chart of internal processing in accordance with a third embodiment of the present invention.

### Preferred Embodiments of the Present Invention

The basic idea of the present invention is: classify real network elements of same type into a virtual network element; a short message gateway forwards short messages to real network elements belonging to the virtual network element via the virtual network element according to the load sharing policy, so as to achieve dynamic load sharing.

In the following, the implementation of the technical scheme will be described in further detail in combination with accompanying drawings.

A method for dynamically sharing load in a short message system comprises the following content in two aspects:
first: classify real network elements of same type to a virtual network element; wherein, adjacent network elements of the short message gateway act as real network elements.
second: the short message gateway forwards short messages via the virtual network element to the real network elements belonging to the virtual network element according to the load sharing policy, so as to achieve dynamic load sharing.

Herein, before forwarding the short messages, the method further comprises a configuration process, the configuration process specifically comprises: configuring real network element accounts; configuring a virtual network element account corresponding to the real network element accounts, as well as the load ratio value of each real network element account in the virtual network element account; configuring the routing data corresponding to the virtual network element account.

Herein, as to the second aspect, forwarding the short messages to the real network elements according to said load sharing policy specifically comprises: the short message gateway sends the short messages to the virtual network element in which the virtual network element account is located according to the virtual network element account corresponding to the routing data; the short message gateway forwards the short messages to the real network elements in which the real network element accounts that do not reach the load ratio value are located in the virtual network element account according to the real network element accounts corresponding to the virtual network element account and the load ratio value of each real network element account in the virtual network element account.

Herein, the load sharing policy specifically comprises: the load ratio value of each real network element account in the virtual network element account, and/or the number of short messages that have been sent to each real network element account in the virtual network element account in the historical record of short message gateway.

Herein, there are at least two real network element accounts in the virtual network element account.

In summary, compare the related art with the present invention as follows:
In the related art, it needs to change the same type of network element devices connected with the short message gateway in the short message gateway system in order to achieve load sharing. However, for the short message gateway system, the linear superposition of the same type of network element devices can fulfill the upgrade of the processing capabilities of that type of network element devices, therefore, the present invention introduces the virtual network element, and classifies real network elements of same type into one virtual network element for unified control, and a virtual network element account is configured for the virtual network element, and the virtual network element forwards the received short messages to the real network element corresponding to each real network element account in the virtual network element account. By adopting the present invention, a waste of hardware investment due to the hardware upgrade can be avoided, moreover, since the dynamic load sharing is implemented in the same type of adjacent network element devices in the short message gateway, rather than sharing the load with the conventional static number segment method, it can enhance the operating efficiency of the entire SMS network.

Specifically, the short message gateway in the present invention uses the function of virtual network element account to configure the virtual network element account for real network element accounts of same type, that is the physical account, in the account configuration; in the routing configuration, the number segment routing as well as the load ratios of its physical accounts are configured for the virtual network element account, and in the case that there is no need to change the real network elements at the peer end, the dynamic load sharing function of real network elements of same type at the peer end can be achieved. In the related art, the short message gateway uses the traditional physical account static number segment routing method, and each of peer-end real network elements of same type can only bear the short message service of a certain number segment, namely, statically sharing the load according to the number segment cannot achieve the dynamic load sharing according to the load ratio, therefore, it leads that in the construction of the short message gateway system, each of peer-end network elements adjacent to the short message gateway needs to consider the peak capacity of its bearing service and the processing capability redundancy, so that when performances of real network elements of same type are inconsistent, it not only causes a waste of the software investment of the operator, but also causes a waste of hardware device investment of the operator.

From above description by comparison, it can be seen that: in the present invention, the solution of introducing the virtual network element and using the function of the virtual network element account to perform dynamic load sharing on the adjacent network elements of the short message gateway make it possible that the investment in the function of short message gateway and the adjacent network elements of short message gateway can achieve the following beneficial effects:
1) in the condition that the adjacent network elements are not required to develop the related customized functions, the dynamic load sharing of adjacent network elements of same type can be implemented in the case that the adjacent network elements themselves are changed.
2) short messages can be dynamically distributed according to the load ratio among adjacent network elements of same type from different manufacturers.
3) It plays a disaster tolerance role and can achieve the backup protection function of adjacent network elements of same type. In the existing short message system, short messages are sent directly to the adjacent network elements of the short message gateway, and if one of the adjacent network elements fails, the service is interrupted, but in the present invention, the short messages are firstly sent to the virtual network element to which a plurality of adjacent network elements of same type belong, and then the virtual network element sends short messages to the trouble-free and adjacent network elements which can bear the current load, therefore, it is always able to ensure that the service is not interrupted. For the disaster tolerance, since the real network elements of same type in the virtual network element dynamically share the load, when one of the real network elements shuts down, the short message gateway can proportionally distribute the short messages to the remaining real network elements by using the present invention. If the load of a certain real network element is configured as 0, the network element can only work as a backup network element without bearing services normally. When all the real network elements whose load ratios are not zero shut down, the backup network element bears all the services of the virtual network element. In the same virtual network element, there might be a plurality of backup network elements whose load ratios are zero.

The present invention comprises the following main contents:
First: the configuration of real network element account is newly added. When configuration of real network element account is newly added, the account name, IP address, login user name and password are required to be configured.
Second: the configuration of virtual network element account is newly added. When the configuration of virtual network element account is newly added, it is required to configure the account name and select the real network element accounts corresponding to the account; each virtual network element account at least needs to comprise more than one real network element account. When configuring the real network element accounts corresponding to the virtual network element account, it is required to configure the load value of each real network element account, and the load value can only be a natural number.
Third: the configuration of the routing data corresponding to the virtual network element account is newly added. When the configuration of the routing data is newly added, it is required to configure the calling information, the called information and the corresponding virtual network element account name of the routing data.
Fourth: when the short message gateway receives a short message sent by an adjacent network element to the virtual network element account, according to the configured routing data, it is determined which virtual network element account the short message needs to be forwarded to.
Fifth: the short message gateway determines to which real network element account in the virtual network element account the short message should be forwarded according to the internal rules.

For the above first aspect, it might further comprise adding the real network element accounts one by one, or adding the real network element accounts with the file batch import method. When using the file batch import method, the import result and the accounts that fail to be imported should be displayed.

For the above second aspect, it might also comprise that each virtual network element account can modify the real network element accounts contained in the virtual network element account. During the modification, the drop-down box can also be used to perform selection according to names of real network elements accounts, or the load value of the real network element can be modified.

For the above second aspect, it also comprises displaying the names, the IP addresses, and the account description of the real network element accounts when the operation interface is displayed, which facilitates the user to select and add the accounts to the current virtual network element account, and the operation interface provides the fast localization function according to the account name, the IP address, and the description. There is no upper limit of the number of the real network element accounts contained in the virtual network element account.

For the fifth aspect, the internal rules for determining to forward the short messages to the destination real network element account comprises: the short message gateway determines which real network element account the short message is forwarded to, based on the order of ID of each account within the system in accordance with the load ratio of each real network element account in the virtual network element account as well as the number of short messages that have been currently sent to each real network element account and are recorded within the system.

Hereinafter, the present invention will be illustrated with examples.

### The first example:

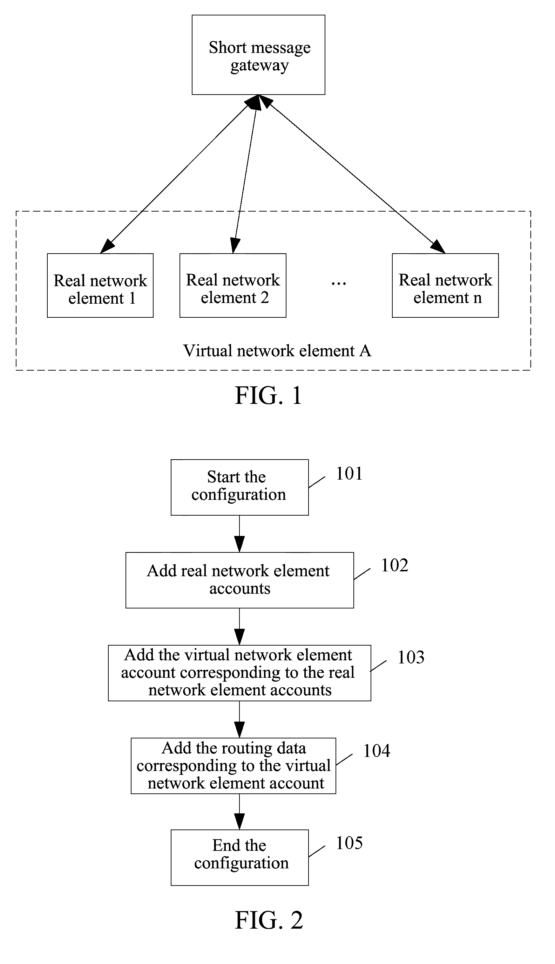

FIG. 1 shows a schematic diagram of networking after a virtual network element is introduced in the short message system, and FIG. 1 shows the connection relationship of the short message gateway, the virtual network element and the adjacent network elements. In FIG. 1, the short message gateway is connected with the real network element 1, the real network element 2 and the real network element n through the TCP/IP network, and the real network element 1, the real network element 2 and the real network element n can receive short messages from or send short messages to the short message gateway. The virtual network element A is the virtual network element to which network elements of same type such as the real network element 1 ~ the real network element n belong.

### The second example:

FIG. 2 shows the configuration process before the short message gateway sends a short message, comprising the following steps:
in step 101, to the configuration is started;
in step 102, real network element accounts are added.

Herein, when adding a real network element account, the name of the real network element account can also be configured to facilitate inquiry.

In step 103, the virtual network element account corresponding to the real network element accounts is added.

Herein, when adding a virtual network element account, the real network element accounts contained in the virtual network element account are required to be configured, and the load ratios of the real network element accounts are configured.

In step 104, after the virtual network element account has been configured, the routing data corresponding to the virtual network element account is added.

In step 105, the configuration ends.

### The third example:

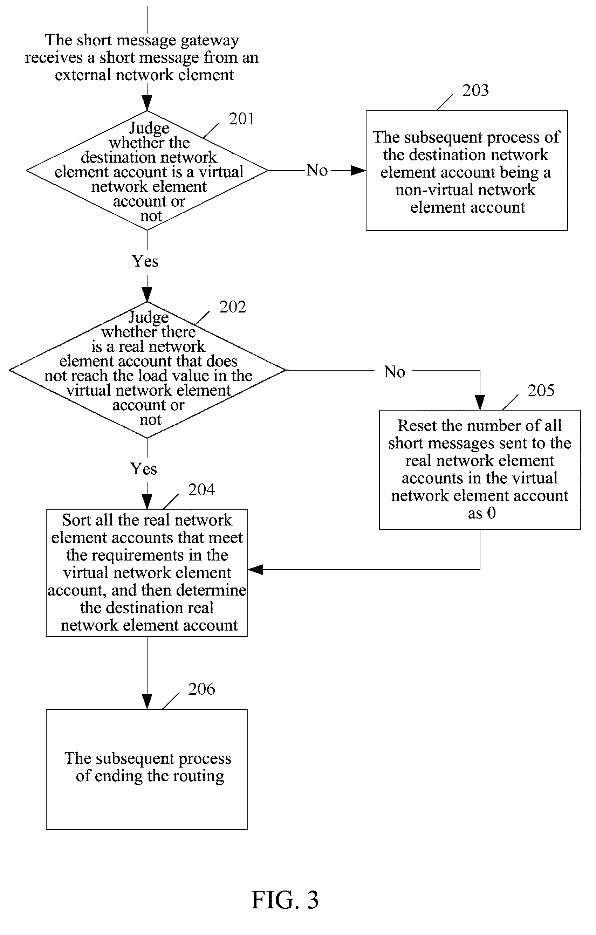

FIG. 3 shows the process of internal processing of the short message gateway before the short message gateway forwards the short messages to the real network elements corresponding to the virtual network element, comprising the following steps:
In step 201, it is judged whether the destination network element account is a virtual network element account or not, if yes, proceed to step 202; otherwise, proceed to step 203.

Herein, the specific processing process of the step is that: after the short message gateway receives a short message from an external network element, the routing judgment is firstly carried out on the short message. The short message gateway inquiries the system internal routing data according to the calling number and the called number of the short message, and if the destination network element account corresponding to the short message is a virtual network element account, proceed to step 202, otherwise, proceed to step 203.

In step 202, it is judged whether there is a real network element account that does not reach the load value in the virtual network element account or not, if yes, proceed to step 204; otherwise, proceed to step 205.

Herein, the specific processing process of this step is that: the short message gateway judges whether there is a real network element account whose number of short messages does not reach the configured load ratio value or not according to the number of short messages sent to each real network element account in the virtual network element account recorded within the system and the load ratio value configured by each real network element account, if yes, proceed to step 204; otherwise, proceed to step 205.

In step 203, proceed to the subsequent process of the destination network element account being a non-virtual network element account.

In step 204, all the real network element accounts meeting the requirements in the virtual network element account are sorted, and then the destination real network element account is determined; proceed to step 206.

Herein, the specific processing process of this step is that: the short message gateway sorts each real network element account that does not reach the configured load ratio value in the virtual network element account according to the internal ID, and then determines that the routing destination network element account is the real network element account that ranks first, and then proceed to step 206. Moreover, after the short message is forwarded to the destination network element account, the short message gateway adds one to the number of short messages sent to the destination network element account.

In step 205, the number of all short messages which has been sent to the real network element accounts in the virtual network element account is reset as 0; proceed to step 206.

Step 206, the subsequent process of ending the routing.

A system for dynamically sharing the load in the short message system comprises: a classifying unit and a load sharing unit. The classifying unit is configured to classify real network elements of same type into a virtual network element; wherein, an adjacent network element of short message gateway acts as the real network element. The load sharing unit is used by the short message gateway to forward short messages via the virtual network element to the real network elements belonging to the virtual network element according to a load sharing policy, so as to achieve dynamic load sharing.

Herein, the system further comprises: a configuration unit for configuring real network element accounts; configuring the virtual network element account corresponding to the real network element accounts, as well as the load ratio value of each real network element account in the virtual network element account; configuring the routing data corresponding to the virtual network element account.

Herein, the load sharing unit is further used by the short message gateway to send short messages to the virtual network element in which the virtual network element account is located according to the virtual network element account corresponding to the routing data; the short message gateway forwards the short messages to the real network elements in which the real network element accounts that do not reach the load ratio value are located in the virtual network element account according to the real network element accounts corresponding to the virtual network element account as well as the load ratio value of each real network element account in the virtual network element account.

Herein, the classifying unit is further configured to classify at least two real network elements of same type into one virtual network element.

In summary, since the scheme of the present invention uses the virtual network element account based short message distribution, it removes the restriction that a plurality of adjacent network elements of same type cannot dynamically share the load with the static number segment load sharing; with the virtual network element account based short message forwarding, a number of adjacent network elements of same type from different manufacturers share the load proportionally; through a plurality of real network element accounts being virtualized as one virtual network element account, the problem that a single real network element account of the adjacent network element of a certain short message gateway cannot afford extra large amount of short message services is solved, thus avoiding the product update of the device providers. In short, with the present invention, the problem that the adjacent network elements of same type of the current short message gateway dynamically share the short message load can be completely solved, so as to maximally avoid the possibility of the waste of hardware investment of the operator in the adjacent network elements of same type of the short message gateway.

The above description is only preferred embodiments of the present invention and is not intended to limit the protection scope of the present invention.

## Claims

1. A method for dynamically sharing load in a short message system, comprising:
classifying real network elements of same type into a virtual network element; wherein an adjacent network element of a short message gateway acts as the real network element;
the short message gateway forwarding short messages via the virtual network element to the real network elements belonging to the virtual network element according to a load sharing policy so as to achieve dynamic load sharing.

2. The method of claim 1, wherein, before forwarding the short messages, the method further comprises a configuration process, and the configuration process comprises:
configuring real network element accounts;
configuring a virtual network element account corresponding to the real network element accounts, and configuring a load ratio value of each real network element account in the virtual network element account;
configuring routing data corresponding to the virtual network element account.

3. The method of claim 1 or 2, wherein, forwarding the short messages to the real network elements according to the load sharing policy comprises:
the short message gateway forwarding the short messages to the virtual network element in which the virtual network element account is located according to the virtual network element account corresponding to the routing data;
the short message gateway forwarding the short messages to the real network elements in which the real network element accounts that do not reach the load ratio value are located in the virtual network element account according to the real network element accounts corresponding to the virtual network element account as well as the load ratio value of each real network element account in the virtual network element account.

4. The method of claim 3, wherein the load sharing policy comprises: the load radio value of each real network element account in the virtual network element account, and/or the number of short messages which have been sent to each real network element account in the virtual network element account in a historical record.

5. The method of claim 4, wherein there are at least two real network element accounts in the virtual network element account.

6. A system for dynamically sharing load in a short message system, comprising: a classifying unit and a load sharing unit; wherein,
the classifying unit is configured to classify real network elements of same type into a virtual network element; wherein, an adjacent network element of short message gateway acts as the real network element;
the load sharing unit is used by the short message gateway to forward short messages via the virtual network element to the real network elements belonging to the virtual network element according to a load sharing policy, so as to achieve dynamic load sharing.

7. The system of claim 6, wherein the system further comprises: a configuration unit, configured to configure real network element accounts; configure a virtual network element account corresponding to the real network element accounts, and a load ratio value of each real network element account in the virtual network element account; configure routing data corresponding to the virtual network element account.

8. The system of claim 6 or 7, wherein the load sharing unit is further used by the short message gateway to send the short messages to the virtual network element in which the virtual network element account is located according to the virtual network element account corresponding to said routing data; the short message gateway forwards the short messages to the real network elements in which the real network element accounts that do not reach the load ratio value are located in the virtual network element account according to the real network element accounts corresponding to the virtual network element account as well as the load ratio value of each real network element account in the virtual network element account.

9. The system of claim 8, wherein the classifying unit is further configured to classify at least two real network elements of same type into one virtual network element.
